Europäisches Patentamt

European Patent Office

Office européen des brevets

(11) Veröffentlichungsnummer: **0 210 576**
**B1**

(12) **EUROPÄISCHE PATENTSCHRIFT**

(45) Veröffentlichungstag der Patentschrift:
31.05.89

(51) Int. Cl.⁴: **B23B 27/18**

(21) Anmeldenummer: 86110042.8

(22) Anmeldetag: **22.07.86**

(54) Schneideinsatz zum spanabhebenden Bearbeiten.

(30) Priorität: **01.08.85 DE 3527544**

(43) Veröffentlichungstag der Anmeldung:
04.02.87 Patentblatt 87/6

(45) Bekanntmachung des Hinweises auf die Patenterteilung:
31.05.89 Patentblatt 89/22

(84) Benannte Vertragsstaaten:
AT BE CH DE FR GB IT LI LU NL SE

(56) Entgegenhaltungen:
AT-B- 184 795
DE-B- 1 777 266
FR-A- 1 099 534
FR-A- 2 333 602
US-A- 4 086 016

(73) Patentinhaber: **Techno Saarstahl GmbH,
Bismarckstrasse 57, D-6620 Völklingen(DE)**

(72) Erfinder: **Altmeyer, Werner, Dr. rer. nat., Saturnstrasse 8,
D-6620 Völklingen(DE)**
Erfinder: **Jakobs, Ewald, Leipziger Strasse 74,
D-6635 Schwalbach-Bous(DE)**
Erfinder: **Scheer, Berthold, Blaulochstrasse 71,
D-6634 Wallerfangen(DE)**

(74) Vertreter: **Vièl, Georg, Dipl.-Ing., Am Zimmerplatz 16,
D-6606 Saarbrücken-Gersweiler(DE)**

**Beschreibung**

Die Erfindung betrifft einem mehrfach einsetzbaren Schneideinsatz zum spanabhebenden Bearbeiten mit einem Grundkörper aus Stahl und einer darauf befestigten Schneidplatte aus Hartmetall.

Für die spanabhebende Bearbeitung, insbesondere von Metall, sind Schneideinsätze, die mehrere Schneiden aufweisen. So ist in der DE-PS 1 800 195 ein Schneideinsatz beschrieben, der vier Schneiden hat. Ist eine Schneide unbrauchbar geworden, so wird der Schneideinsatz gedreht bzw. gewendet und die nächste, noch unbeschädigte Schneide kommt zur Einsatz. Ist dieser bekannte Schneideinsatz aus Hartmetall hergestellt, so besteht die Gefahr, daß bereis beim Einsatz der ersten Schneide der Schneidkörper - beispielsweise durch einen Riß - so beschädigt wird, daß alle vier Schneiden nicht mehr brauchbar sind.

Aus diesen Gründen sind Schneideinsätze bzw. Mehrfachschneidplatten bekannt geworden, bei denen ein relativ zäher Grundkörper aus Stahl vorhanden ist und mit diesem verbundene Streifen aus Hartmetall oder Schneidkeramik die Schneiden bilden (GB-PS 1.493.028). Diese Ausführung hat den Nachteil, daß sie nur auf einer Seite als Schneidplatte eingesetzt wird, d.h. es steht nur eine Zwei-Schneiden-Platte zur Verfügung. - Das Anbringen (Löten) von zwei Hartmetall-Leisten auch auf der Unterseite des Schneideinsatzes, stößt bei der industriellen Herstellung auf erhebliche Schwierigkeiten. Schon das Fixieren von nur zwei Streifen aus Hartmetall auf dem Grundkörper und das Löten in einem Ofen ist relativ aufwendig.

Bei Mehrfachschneidplatten des besagten Typs ist auch schon vorgeschlagen worden, daß der Grundkörper an der Seite eine von der Oberkante zur Unterkante verlaufende, durch zwei Vorsprünge gebildete Z-förmige Aussparung aufweist, der eine Z-förmige Leiste aus Schneidwerkstoff zugeordnet ist (DE-Patentanmeldung P 34 33 184.0-14). Auf diese Weise können auf der Ober- und Unterseite je zwei Schneiden geschaffen werden.

Der Erfindung liegt die Aufgabe zugrunde, einen mehrfach einsetzbaren Schneideinsatz der eingangs genannten Art zu realisieren, der auf der Oberseite und ggf. auch auf der Unterseite zwei oder mehr voneinander unabhängige Schneiden hat.

Diese Aufgabe wird erfindungsgemäß dadurch gelöst, daß die Schneidplatte ringförmig gebildet ist, daß die Schneiden durch Abschnitte der Schneidplatte voneinander getrennt und die Abschnitte der Schneidplatte im Querschnitt gegenüber den Schneiden verringert ausgebildet sind, wobei die Querschnittsverringerung so groß ist, daß die ringförmige Schneidplatte im Bereich der Abschnitte nach dem Löten bzw. nach einer Beanspruchung der Schneiden zur Bildung voneinander getrennter Schneiden Risse aufweist.

Nach einer weiteren Ausbildung der Erfindung ist vorgesehen, daß die ringförmige Schneidplatte im Bereich der Schneiden höher und der Grundkörper entsprechend niedriger als im Randbereich ausgebildet ist.

Eine andere Ausbildung der Erfingdung besteht darin, daß die ringförmige Schneidplatte an der Unterseite und der Grundkörper an seiner Oberseite nach außen abfallend ausgebildet sind.

Erfindungsgemäß kann die Querschnittsverringerung der Abschnitte durch von der Oberseite, der Unterseite oder Ober- und Unterseite ausgehende Kerben vorgenommen sein

Der erfindungsgemäße Schneideinsatz kann in allen gängigen Formen hergestellt sein, insbesondere kreisförmig, in Form eines Dreiecks, Vierecks, Sechsecks, Achtecks oder eines sonstigen Mehrecks.

Auch ist es nach der Erfindung möglich, den Grundköper auf der Ober- und der Unterseite mit je einer ringförmigen Schneidplatte zu versehen.

Die mit der Erfindung erzielten Vorteile bestehen insbesondere darin, daß eine wirtschaftlich herstellbare Mehrfachschneidplatte zur Verfügung steht, bei der alle vorhandenen Schneiden einsetzbar sind, auch wenn die eine oder andere Schneide z.B durch Bruch beschädigt worden ist. Von besonderem Interesse ist das bei Schneideinsätzen mit auf einer Seite drei oder mehr Schneiden.

Ausführungsbeispiele der Erfindung wird anhand der Zeichnungen näher erläutert.

Es zeigt

Fig. 1 einen runden Schneideinsatz nach der Erfindung und
Fig. 2 den Schnitt A-B zu Fig. 1,
Fig. 3 und
Fig. 4 ebenfalls einen runden Schneideinsatz mit etwas anders ausgebildeter Schneidplatte,
Fig. 5 und
Fig. 6 einen dreieckigen Schneideinsatz gemäß der Erfindung in zwei Ansichten,
Fig. 7 und
Fig. 8 einen viereckigen Schneideinsatz in zwei Ansichten,
Fig. 9 die Ansicht eines Schneideinsatzes mit drei Schneiden zum Schälen und
Fig. 10 einen solchen Schneideinsatz mit zwei Schneiden,
Fig. 11 und
Fig. 12 einen Schneideinsatz mit im Schneidenbereich verdickter Schneidplatte,
Fig. 13 einen Grundkörper,
Fig. 14 und
Fig. 15 eine ringförmige Schneidplatte,
Fig. 16 und
Fig. 17 einen Grundkörper außen abfallend ausgebildet,
Fig. 18 und
Fig. 19 sowie
Fig. 20 eine dazugerhörige ringförmige Schneidplatte,
Fig. 21 und
Fig. 22 einen mit zwei Schneidplatten versehenen Grundkörper.

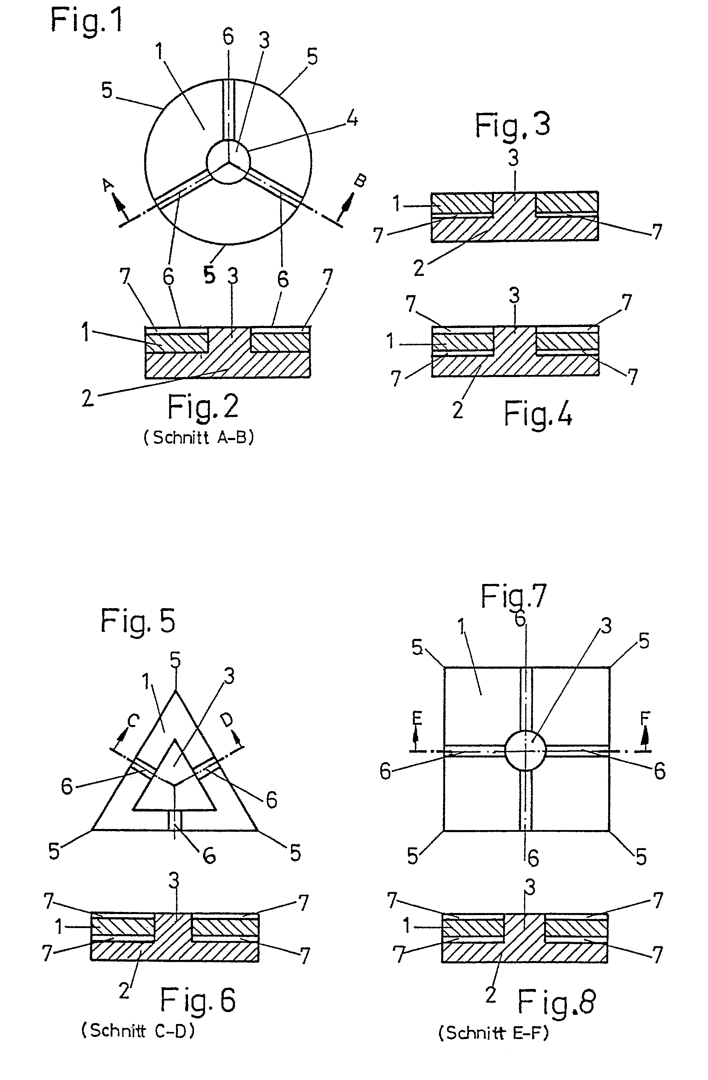

Fig. 1 und 2 zeigen eine erfindungsgemäße ringförmige schneidplatte 1, die z.B durch Löten mit dem Grundkörper 1 aus Stahl verbunden ist. Zur Fixierung der Lage der Schneidplatte 1 auf dem Grundkörper 2 hat letzterer einen Zapfen 3, dem ein Loch 4 in der Schneidplatte 1 zugeordnet ist. Die Schneidplatte 1 hat in dem dargestellten Beispiel drei Schneiden 5, die durch Abschnitte 6 voneinander getrennt sind. Die Abschnitte 6 sind als Kerben 7 ausgebildet, wodurch diese Abschnitte 6 im Querschnitt gegenüber den Schneiden 5 verringert ausgebildet sind (Fig. 2). Die Verringerung des Querschnitts der Abschnitte 6 bewirkenden Kerben 7 können von der Oberseite (Fig, 2), der Unterseite (Fig. 3) oder von Ober- und Unterseite (Fig. 4) ausgehen.

Der Kern der Erfindung besteht darin, daß entgegen der bekannten Ausbildung von ringförmigen Schneidplatten 1 aus Hartmetall diese auf der Oberseite und/oder der Unterseite nicht eben ausgeführt sind, sondern gegenüber den Schneiden 5 im Querschnitt verringerte Abschnitte 6 aufweisen. Diese gezielt angeordneten Bruchstellen bewirken, daß beim Löten von Schneidplatte 1 und Grundkörper 2 infolge deren unterschiedlichem Ausdehnungskoeffizient die Schneidplatte 1 im Bereich von wenigstens einem der Abschnitte 6 (bewußt) reißt. In der Regel entstehen beim Löten Risse im Bereich aller Abschnitte 6, spätestens aber beim Arbeiten (Zerspanen) mit dem Schneideinsatz, d.h. bei mechanischer Beanspruchung des Schneideinsatzes, entstehen auch im Bereich der Abschnitte 6 Risse, die beim Löten noch nicht entstanden sind. So ergibt sich ein Schneideinsatz mit drei voneinander getrennten Hartmetall-Schneiden 5. Das hat zur Folge, daß bei Beschädigung einer Schneide 5 beim Drehen oder Schälen die anderen beiden Schneiden 5 unbeeinfluß und damit einsatzbereit bleiben. Wäre die Schneidplatte 1, wie bekannt, an allen Stellen gleich stark - aus einem Stück - ausgebildet, bestände die Gefahr, daß nach einer Beschädigung an einer Stelle die gesamte Platte unbrauchbar würde.

Fig. 5 und Fig. 6 zeigt eine dreieckförmige Schneidplatte 1 mit entsprechend ausgebildetem Grundkörper 2, der einen Zapfen 3 aufweist. Auch hier sind drei Schneiden 5 vorhanden, die durch Abschnitte 6 voneinander getrennt sind. Die Verringerung des Querschnitts im Bereich der Abschnitte 6 wird durch von der Ober- und Unterseite ausgehende Kerben 7 erreicht.

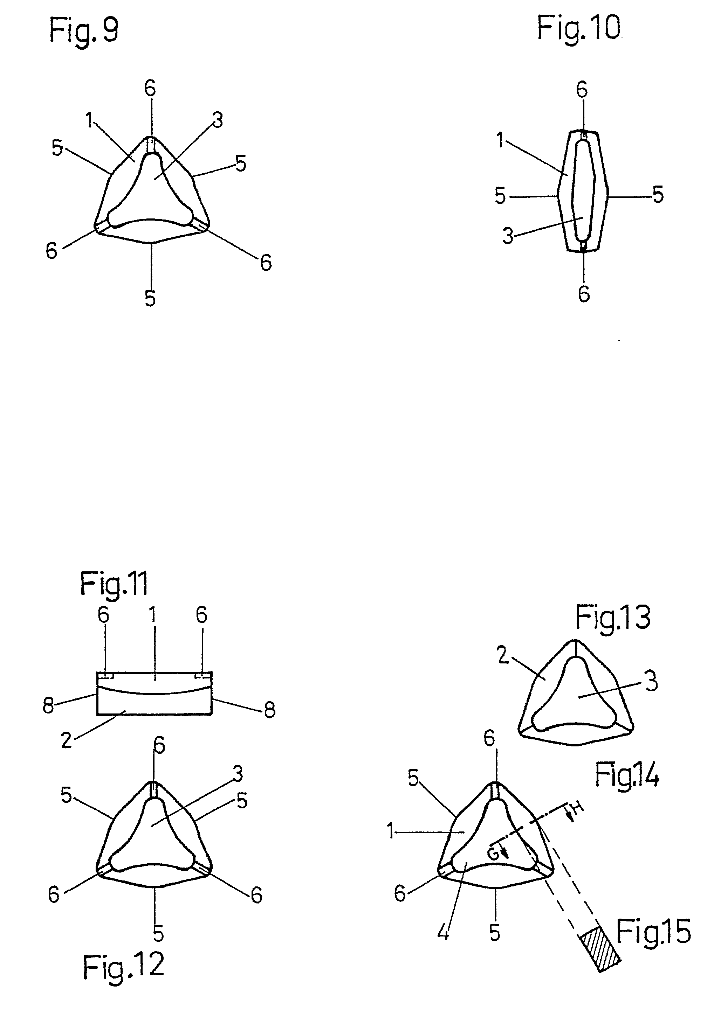

Einen Schneideinsatz mit vier Schneiden 5 zeigt Fig. 7 und 8. Hier ergibt sich, daß nach dem Löten oder ggf. beim Zerspanen durch Risse im Bereich der Abschnitte 6 sich sozusagen vier mit dem Grundkörper 2 verlötete, voneinander getrennte Hartmetall-Schneiden 5 ergeben. Das bedeutet, der Verwender eines solchen Schneideinsatzes kann davon ausgehen, daß ihm vier Schneiden 5 zur Verfügung stehen.

Fig. 9 zeigt einen bekannten Schneideinsatz zum Schälen, der nach dem gleichen erfindungsgemäßen Prinzip ausgebildet ist. Die drei Schneiden 5 sind wieder durch Abschnitte 6 voneinander getrennt, die einen geringeren Querschnitt als die Schneiden 5 haben. Auch bei diesem Schneideinsatz reißt die ringförmige Schneidplatte 1 beim Löten beim Zerspanen in drei Teile (Schneiden), die dann fest mit dem Grunkörper 2 verbunden sind. So bleiben beim Arbeiten mit einer Schneide 5 die anderen beiden Schneiden 5 unbeeinflußt, insbesondere wenn eine Schneide 5 beim Drehen oder Schälen überbeansprucht ist und dadurch beispielsweise zu Bruch geht.

Der in Fig. 10 dargestellte Schneideinsatz hat ebenfalls eine ringförmige Schneidplatte 1 mit zwei Schneiden 5, die wieder durch Abschnitte 6 voneinander getrennt sind. Gegenüber dem eingangs angegebenen bekannten Schneideinsatz mit 2 durch einen Steg getrennten Hartmetall-Leisten kann der Schneideinsatz nach Fig. 10 wegen der ringförmigen Schneidplatte 1 leichter und damit kostengünstiger hergestellt werden.

Der Schneideinsatz nach der Erfindung kann noch verbessert werden, wenn gemäß Fig. 11 und 12 die ringförmige Schneidplatte 1 im Bereich der Schneiden 5 höher und der Grundkörper 2 entsprechend neidriger als im Randbereich ausgebildet ist. Dann ist an der Stelle das Hartmetall konzentriert, wo es benötigt wird, nämlich an den Schneiden 5.

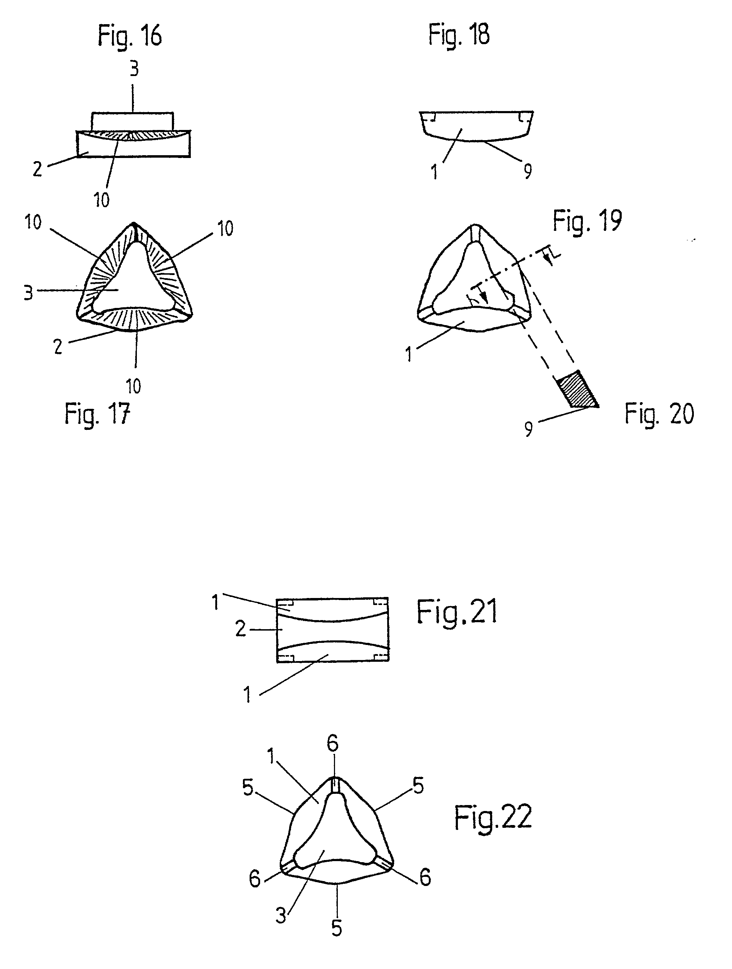

Fig. 13 neigt einen Grundkörper 2 herausgezeichnet und Fig. 14 mit Fig. 15 eine ringförmige Schneidplatte 1.

Für die Produktion von Scheinsätzen nach der Erfindung ist es von Vorteil, wenn die ringförmige Schneidplatte 1 an der Unterseite 9 und der Grundkörper 2 an seiner Oberseite 10 nach außen abfallend ausgebildet sind. Einen so gestalteten Grundkörper 2 zeigen die Fig. 16 und 17 in zwei Ansichten. Fig. 18 und 19 sowie 20 zeigen die dazugehörige ringförmige Schneidplatte 1. Diese erfindungsgemäße Ausbildung hat den Vorteil, daß beim Aufsetzen der ringförmigen Schneidplatte auf den Grundkörper 2 erstere sich selbständig zentriert und Grundkörper 2 mit aufliegender Schneidplatte 1 ohne weiteres z.B einer Ofen-Lötung zugeführt werden können, ohne daß es irgendwelcher Maßnahmen zur Fixierung der Schneidplatte 1 auf dem Grundkörper 2 bedarf.

Erfindungsgemäß ist es auch denkbar, daß der Grundkörper 2 beidseitig je eine ringförmige Schneidplatte 1 aufweist, wie das schematisch in Fig. 21 und 22 dargestellt ist.

Die im Querschnitt gegenüber den Schneiden 5 verringerten Abschnitte 6 stellen Sollbruchstellen dar, die nach dem Löten bzw. nach einer mechanischen Beanspruchung der Schneiden 5 Risse aufweisen und so voneinander getrennte Schneiden 5 ermöglichen. Die Verringerung des Querschnitts im Bereich der Abschnitte 6 ist nicht auf die beschriebenen Beispiele beschränkt, wo die Ober- und/oder Unterseite der Schneidplatten 1 nicht eben ausgeführt ist. Vielmehr kann im Bereich der Abschnitte 6 die Querschnittsverringerung in jeder beliebigen Richtung verlaufen, d.h. beispeilsweise auch durch eine Verringerung der Breite der ringförmigen Schneidplatte verwirklicht werden. Es muß nur sicher gestellt sein, daß der Querschnitt der ringförmigen Schneidplatte 1 dort in beliebiger Weise Verringert ist, wo die Schneidplatte 1 reißen soll.

## Patentansprüche

1. Mehrfach einsetzbarer Schneideinsatz zum spanabhebenden Bearbeiten mit einem Grundkörper aus Stahl und einer durch Löten darauf befestigten, Schneiden (5) aufweisenden Schneidplatte aus Hartmetall, dadurch gekennzeichnet, daß die Schneidplatte ringförmig ausgebildet ist, daß die Schneiden (5) durch Abschnitte (6) der Schneidplatte voneinander getrennt und die Abschnitte (6) der Schneidplatte im Querschnitt gegenüber den Schneiden (5) verringert ausgebildet sind, wobei die Querschnittsverringerung so groß ist, daß die ringförmige Schneidplatte (1) im Bereich der Abschnitte (6) nach dem Löten bzw. nach einer Beanspruchung der Schneiden (5) zur Bildung voneinander getrennter Schneiden (5) Risse aufweist.

2. Mehrfach einsetzbarer Schneideinsatz nach Anspruch 1, dadurch gekennzeichnet, daß die ringförmige Schneidplatte (1) im Bereich der Schneiden (5) höher und der Grundkörper (2) entsprechend niedriger als im Randbereich (8) ausgebildet ist.

3. Mehrfach einsetzbarer Schneideinsatz nach Anspruch 1 oder 2, dadurch gekennzeichnet, daß die ringförmige Schneidplatte (1) an der Unterseite (9) und der Grundkörper (2) an seiner Oberseite (10) nach außen abfallend ausgebildet sind.

4. Mehrfach einsetzbarer Schneideinsatz nach Anspruch 1, dadurch gekennzeichnet, daß die Querschnittsverringerung der Abschnitte (6) durch von der Oberseite der ringförmigen Schneidplatte (1) ausgehende Kerben (7) vorgenommen ist.

5. Mehrfach einsetzbarer Schneideinsatz nach Anspruch 1, dadurch gekennzeichnet, daß die Querschnittsverringerung der Abschnitte (6) durch von der Unterseite der ringförmigen Schneidplatte (1) ausgehende Kerben (7) vorgenommen ist.

6. Mehrfach einsetzbarer Schneideinsatz nach Anspruch 1, dadurch gekennzeichnet, daß die Querschnittsverringerung der Abschnitte (6) durch von der Unterseite und der Oberseite der ringförmigen Schneidplatte (1) ausgehende Kerben (7) vorgenommen ist.

7. Mehrfach einsetzbarer Schneideinsatz nach einem oder mehreren der vorhergehenden Ansprüche, dadurch gekennzeichnet, daß die Schneidplatte (1) kreisförmig ist.

8. Mehrfach einsetzbarer Schneideinsatz nach einem oder mehreren der vorhergehenden Ansprüche, dadurch gekennzeichnet, daß die Schneidplatte (1) die Form eines Mehrecks hat.

9. Mehrfach einsetzbarer Schneideinsatz nach Anspruch 8, dadurch gekennzeichnet, daß die Schneidplatte (1) die Form eines Dreiecks hat.

10. Mehrfach einsetzbarer Schneideinsatz nach Anspruch 8, dadurch gekennzeichnet, daß die Schneidplatte (1) die Form eines Vierecks hat.

11. Mehrfach einsetzbarer Schneideinsatz nach Anspruch 8, dadurch gekennzeichnet, daß die Schneidplatte (1) die Form eines Sechsecks hat.

12. Mehrfach einsetzbarer Schneideinsatz nach Anspruch 8, dadurch gekennzeichnet, daß die Schneidplatte (1) die Form eines Achtecks hat.

13. Mehrfach einsetzbarer Schneideinsatz nach einem oder mehreren der vorhergehenden Ansprüche, dadurch gekennzeichnet, daß der Grundkörper (2) auf der Ober- und der Unterseite je eine ringförmige Schneidplatte (1) aus Hartmetall aufweist.

## Claims

1. Multiple use cutting insert for chip-removal machining, having a main body in steel and, fastened to it by brazing, a carbide tip with cutters (5), characterized in that the carbide tip is formed ring-shaped, that the cutters (5) are separated from one another by tip parts (6), the tip parts (6) being designed to have a smaller cross-section than the cutters (5) and the reduction in cross-section being sufficiently great for the ring-shaped tip (1) to have cracks in the region of the tip parts (6) after brazing or after the cutters (5) have been subjected to load so that cutters (5), separated from one another, are formed.

2. Multiple use cutting insert according to Claim 1, characterized in that the ring-shaped carbide tip (1) is designed to be higher in the region of the cutters (5) and the main body (2) is designed to be correspondingly lower than in the edge region (8).

3. Multiple use cutting insert according to Claim 1 or 2, characterized in that the bottom (9) of the ring-shaped carbide tip (1) and the top (10) of the main body (2) are designed to slope downwards towards the outside.

4. Multiple use cutting insert according to Claim 1, characterized in that the reduction in cross-section of the tip parts (6) is provided by notches (7) starting from the top of the ring-shaped tip (1).

5. Multiple use cutting insert according to Claim 1, characterized in that the reduction in cross-section of the tip parts (6) is provided by notches (7) starting from the bottom of the ring-shaped tip (1).

6. Multiple use cutting insert according to Claim 1, characterized in that the reduction in cross-section of the tip parts (6) is provided by notches (7) starting from the bottom and the top of the ring-shaped tip (1).

7. Multiple use cutting insert according to one or more of the preceding claims, characterized in that the carbide tip (1) is circular.

8. Multiple use cutting insert according to one or more of the preceding claims, characterized in that the carbide tip (1) has the shape of a polygon.

9. Multiple use cutting insert according to claim 8, characterized in that the carbide tip (1) has the shape of a triangle.

10. Multiple use cutting insert according to claim 8, characterized in that the carbide tip (1) has the shape of a square.

11. Multiple use cutting insert according to claim 8, characterized in that the carbide tip (1) has the shape of a hexagon.

12. Multiple use cutting insert according to claim 8, characterized in that the carbide tip (1) has the shape of an octagon.

13. Multiple use cutting insert according to one or more of the preceding claims, characterized in that there is a ring-shaped carbide tip (1) on both the top and the bottom of the main body (2).

## Revendications

1. Outil de coupe rapporté, qui peut être utilisé plusieurs fois et qui est destiné à l'usinage avec enlèvement de copeaux, comprenant une embase en acier et une plaquette de coupe en métal dur, qui y est fixée par soudage et qui comporte des tranchants (5), caractérisée en ce que la plaquette de coupe est de forme annulaire, en ce que les tranchants (5) sont séparés les uns des autres par des sections (6) de la plaquette de coupe et les sections (6) de la plaquette de coupe ont, par rapport aux tranchants (5), une coupe transversale diminuée, la diminution de la coupe transversale étant si grande que la plaquette de coupe (1) présente, dans la région des sections (6), après le soudage ou après une contrainte exercée sur les tranchants (5), des fissures destinées à la formation des tranchants (5) distincts les uns des autres.

2. Outil de coupe rapporté, qui peut être utilisé plusieurs fois, suivant la revendication 1, caractérisé en ce que la plaquette de coupe (1) de forme annulaire est plus haute dans la région des tranchants (5) et l'embase (2) y est, d'une manière correspondante, plus basse que dans la région marginale (8).

3. Outil de coupe rapporté, qui peut être utilisé plusieurs fois, suivant la revendication 1 ou 2, caractérisé en ce que le côté inférieur (9) de la plaquette de coupe (1) de forme annulaire et le côté supérieur (10) de l'embase (2) présentent des pentes inclinées vers le bas et vers l'extérieur.

4. Outil de coupe rapporté, qui peut être utilisé plusieurs fois, suivant la revendication 1, caractérisé en ce que la diminution en coupe transversale des sections (6) est obtenue par des rainures (7) issues du côté supérieur de la plaquette de coupe (1) de forme annulaire.

5. Outil de coupe rapporté, qui peut être utilisé plusieurs fois, suivant la revendication 1, caractérisé en ce que la diminution en coupe transversale des sections (6) est obtenue par des rainures (7) issues du côté inférieur de la plaquette de coupe (1) de forme annulaire.

6. Outil de coupe rapporté, qui peut être utilisé plusieurs fois, suivant la revendication 1, caractérisé en ce que la diminution en coupe transversale des sections (6) est obtenue par des rainures (7) issues du côté inférieur et du côté supérieur de la plaquette de coupe (1) de forme annulaire.

7. Outil de coupe rapporté, qui peut être utilisé plusieurs fois, suivant l'une ou plusieurs des revendications précédentes, caractérisé en ce que la plaquette de coupe (1) est de forme circulaire.

8. Outil de coupe rapporté, qui peut être utilisé plusieurs fois, suivant l'une ou plusieurs des revendications précédentes, caractérisé en ce que la plaquette de coupe (1) a la forme d'un polygone.

9. Outil de coupe rapporté, qui peut être utilisé plusieurs fois, suivant la revendication 8, caractérisé en ce que la plaquette de coupe (1) a la forme d'un triangle.

10. Outil de coupe rapporté, qui peut être utilisé plusieurs fois, suivant la revendication 8, caractérisé en ce que la plaquette de coupe (1) a la forme d'un quadrilatère.

11. Outil de coupe rapporté, qui peut être utilisé plusieurs fois, suivant la revendication 8, caractérisé en ce que la plaquette de coupe (1) a la forme d'un hexagone.

12. Outil de coupe rapporté, qui peut être utilisé plusieurs fois, suivant la revendication 8, caractérisé en ce que la plaquette de coupe (1) a la forme d'un octogone.

13. Outil de coupe rapporté, qui peut être utilisé plusieurs fois, suivant l'une ou plusieurs des revendications précédentes, caractérisé en ce que l'embase (2) comporte, du côté supérieur et du côté inférieur, respectivement une plaquette de coupe (1) de forme annulaire en métal dur.

EP 0 210 576 B1

Fig.1

Fig.2
(Schnitt A-B)

Fig.3

Fig.4

Fig.5

Fig.6
(Schnitt C-D)

Fig.7

Fig.8
(Schnitt E-F)

EP 0 210 576 B1

Fig. 9

Fig. 10

Fig. 11

Fig. 13

Fig. 12

Fig. 14

Fig. 15

Fig. 16

Fig. 18

Fig. 17

Fig. 19

Fig. 20

Fig.21

Fig.22